# EUROPEAN PATENT APPLICATION

(11) **EP 0 741 466 A2**
(43) Date of publication of application: **06.11.1996**
(21) Application number: 96850087.6
(22) Date of filing: 03.05.1996
(51) Int. Cl.: H04B 7/08

(54) **Method and apparatus for adaptive antenna selection in a mobile radio communications system**

(30) Priority: 03.05.1995 US 433593
(71) Applicant: HUGHES ELECTRONICS, Los Angeles, CA 90080-0028 (US)
(72) Inventor: Kay, Stanley E., Rockville, MS 20853 (US); Corrigan III, John E., Chevy Chase, MD 20815 (US); Lee, Lin-nan, Potomac, MD 20854 (US); MacDonald, Andrew, Damascus, MD 20872 (US)
(74) Representative: Karlsson, Leif Karl Gunnar

(57) **Abstract**

A method and apparatus for selecting an antenna in a mobile radio communications system is described. An antenna selector switch, at least two receive paths, and a demodulator are included. The demodulator makes signal quality measurements on the received signals, processes the received signals and controls the antenna selector switch. The method includes receiving signals at a demodulator from at least two receive paths, measuring signal quality of the received signals, and controlling a switch connected to a plurality of antennas with the demodulator based on the signal quality measurements.

## Description

### BACKGROUND OF THE INVENTION

This invention relates to an improved method and apparatus for adaptively selecting antennas in a mobile radio communications system. Generally, an array of antennas is used to adequately communicate with and track a mobile radio unit transmitting in a defined geographical area In cellular communications, for example, a cellular base station receives signals from a group of antennas arrayed in a cell. Mobile subscriber units (SU) moving through or within a cell transmit signals that are received at the various antennas within the cell. The antennas in the cell receive a signal having a different signal quality level depending on the SU's position and the fading characteristics of the signal and propagation path. In order to maintain the highest standard of signal quality, optimization procedures for assessing the antennas receiving the best quality signals are desirable. In addition, many cellular systems utilize a time division multiple access (TDMA) format to increase the efficiency of radio frequency (RF) spectrum use. The TDMA format utilizes a predetermined number of time slots in a frame of timed bursts or information on a given RF frequency sent by individual SU's. Typically, each time slot in a TDMA frame carries information from one SU. Because each time slot bay be carrying information from an SU and each SU may be in a different location in a cell, an antenna selector may need to switch antennas each time slot for optimizing each user's signal.

Presently, each cell in a cellular communications system uses a receiver to process each user's call and a separate scanning receiver for determining which antennas in the cell should be connected to the processing receiver. By using an external scanning receiver to track individual users, the costs associated with each cell are high because of the expense associated with the scanning receiver circuitry. In addition separate scanning receivers decrease system flexibility. Changes to the number of antennas in a cell or the type of scanning procedure used may require corresponding changes to hardware.

Accordingly, there is a need for a method and apparatus for selecting an antenna that reduces the number of components, and therefore the expense, in a cell site. Furthermore, there is a need for an antenna selector system and method of using the same that can select antennas when TDMA format signals are used.

### SUMMARY OF THE INVENTION

According to a first aspect of this invention, an adaptive antenna selector system for use in a mobile radio communications system is provided. In one embodiment, the system includes a switch for receiving and routing signals from a plurality of antennas. At least two receive paths connect the switch to a demodulator. The demodulator is coupled to the receive paths for receiving and measuring signal quality of the signals and is also coupled to the switch for selecting an antenna based upon the signal quality measured. Preferably, the demodulator is coupled to the switch via a control line. In one preferred embodiment, each of the receive paths has a downconvertor coupled to the switch and an A/D convertor coupled to the downconvertor. In another preferred embodiment, the radio communications system is a TDMA based system and the switch is connected to a cell having a plurality of sectors, each sector having at least one antenna. The plurality of antennas preferably comprise a cell having multiple subsectors, each subsector including a pair of diversity antennas.

According to a second aspect of the present invention, a method for adaptively selecting antennas in a radio communications system is provided. The method first includes the step of receiving signals from at least two receive paths at a demodulator. Next, the demodulator periodically measures the signal quality of the received signals. After measuring signal quality, the demodulator controls a switch connected to a plurality of antennas to route signals from selected antennas to the receive paths based on the signal quality measurements.

According to a third aspect of the present invention, a method for selecting antennas in a radio communications system using partial time slot measurements is provided. The first step includes receiving signals at a demodulator from a first and a second antenna in a subsector. The signal quality of the signals is then measured in the demodulator for a first portion of a time slot. The demodulator then determines if the signal quality is greater than a predetermined threshold value. Based on the signal quality measurement, the demodulator controls a switch connected to a plurality of antennas to select signals from another antenna in an adjacent subsector for a second portion of the time slot.

In a preferred embodiment of the present method, the switch is an N x 2 switch and the radio communications system is a TDMA-based cellular system. The signal quality measurement may be a received signal strength determination.

### BRIEF DESCRIPTION OF THE DRAWINGS

Fig. 1 is a block diagram of a preferred embodiment of an adaptive antenna selector system.

Fig. 2 is a diagram of an antenna configuration that may be used with the system of Fig. 1.

Fig. 3 is a diagram of a second alternative antenna configuration that may be used with the system of Fig. 1.

Fig. 4 is a block diagram of an analog control channel receiver arrangement for use in an IS-54 based system.

Fig. 5 is a flow diagram outlining a preferred method of selecting an antenna in a radio communications system.

Fig. 6 is a lookup table for use with the method of Fig. 5.

Fig. 7 is a graph of received signal strength versus time for two subsectors in a cell using the presently preferred system and method for selecting an antenna.

Fig. 8 is an illustration or a response or a an antenna selector system to a mobile unit according to a presently preferred embodiment.

Fig. 9 is a flow diagram showing an alternative embodiment of the method shown in Fig. 5.

Fig 10 is a flow diagram of a demodulator for use in the method shown in Fig. 5.

Fig. 11 is a block diagram of an alternative embodiment of an antenna selection system for use with an antenna hopping switch.

### DETAILED DESCRIPTION OF THE DRAWINGS

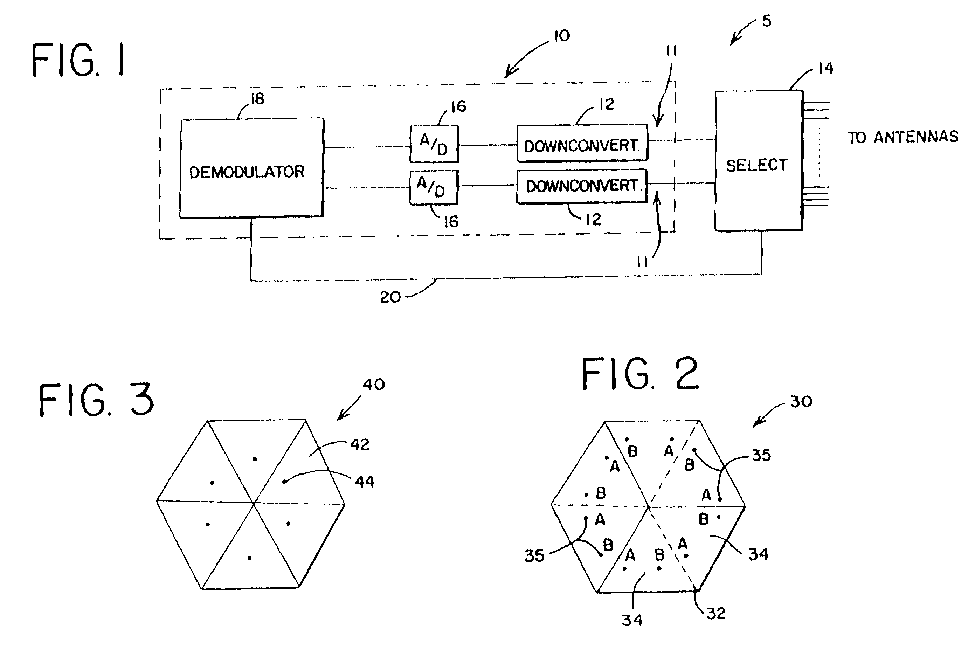

Fig. 1 illustrates a preferred embodiment of the adaptive antenna selector system 5 of the present invention. As shown in Fig. 1, a receiver 10 includes at least two receive paths 11 and a demodulator 18. The receive paths 11 each have a downconvertor 12 for downconverting radio frequency (RF) signals carrying voice and information data received from a switch 14. The downconvertor 12 is connected to an analog-to-digital (A/D) convertor 16. The A/D converters 16 sample the downconverted signals deceived from the downconvertors 12 and transmit the sampled signals to the demodulator 18.

The switch 14, which may be an antenna select switch, is capable of receiving signals from a plurality of antennas and connecting a predetermined number of the antennas to the receiver 10. In one preferred embodiment the switch 14 is a N x 2 switch that can be instructed to select any two antennas and connect the signals of those two antennas to the receiver 10. As is seen in Fig. 1, the select switch 14 is electrically connected to the demodulator 18 by a control line 20. The control line 20 carries antenna switch instructions generated by the demodulator 18 to the switch 14. Thus, the same demodulator 18 that processes the received signals is also controlling the antenna switch 14.

In a preferred embodiment, the antenna selector system 5 is a base transceiver station controlling a multi-sector cell site. Examples of antenna configurations for multi-sector cell sites are shown in Figs. 2 and 3. In Fig. 2, the cell bite 30 is divided into three sectors 32. Each sector 32 is further divided into two subsectors 34. Every subsector preferably contains a pair of spatially diverse antennas 35. In Fig. 3, an alternative cell site 40 arrangement is shown. The cell site 40 has six sectors 42 and each sector 42 has at least one antenna 44. The switch 14 may be connected to each antenna in the cell site or to a configurable subset of the antennas.

A presently preferred embodiment of an adaptive antenna selector system 5 is for use in cellular radio communications systems using interleaved time division multiple access (TDMA) transmission formats. Preferred formats are GSM standard formats, such as GSM 900, DCS 1800, and DCS 1900. These formats are commonly used in the radio communications industry and generally known to those of ordinary skill in the art. In these formats, voice and data from eight different users may share a TDMA channel. A typical channel is structured such that bursts of information, approximately 500 microseconds long, interleaved with error correction data, are packed into one of eight time slots. The eight time slots are ordered in message frames that repeat every 4.615 milliseconds. Thus if all the time slots are in use, eight different subscribers are broadcasting in timed bursts every 4.615 milliseconds and each one of these users need to be tracked by a system receiver assigned to handle voice and data traffic across a particular geographic area. In one preferred embodiment, the system receiver may be a base transceiver station in a cellular telephone network. The adaptive antenna selector system of the present invention provides a method for selecting the best antennas to receive signals from each individual user based on signal quality measurements made by the demodulator 18 without the need for an external scanning receiver.

In a preferred embodiment, the method begins with initially acquiring a signal from a subscriber unit when it activates or enters into a cell site. The subscriber unit will typically access the cellular system by sending out a signal during a control channel period. In a DCS 1900 system the subscriber unit preferably accesses the cellular system during the random access channel (RACH) period. Preferably, the select switch 14 is connected to a cell site having diversity antennas in each subsector (see Fig. 2). The demodulator 18 controls the switch 14 to select an antenna in one subsector and an antenna in the other subsector.

In an alternative embodiment, the step of initially acquiring the subscriber unit may be accomplished by controlling the select switch 14 with the demodulator 18 such that the signals of both antennas in a subsector are combined on one signal path and both antennas in an adjacent subsector can be combined on a second signal path to broaden the search area to 120° from 60°.

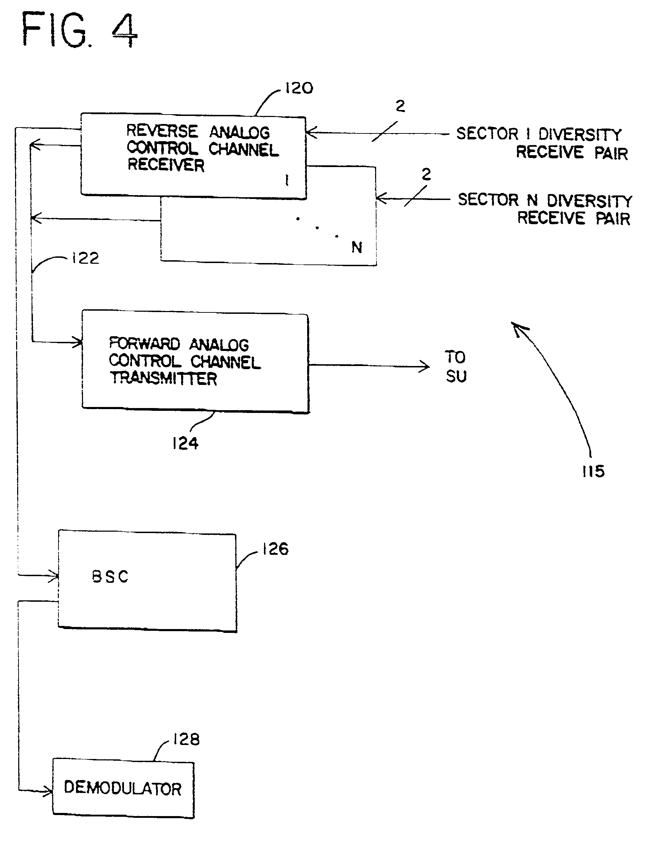

The antenna selector system 5 may also be used in an IS-54 standard system. In an IS-54 system the antenna selector system 5 initially acquires the subscriber unit on a separate analog control channel 115. The analog control channel, as illustrated in Fig. 4, requires separate control channel receivers 120 in each sector to locate a subscriber unit. Each reverse analog control channel receiver 120 connects to a different sector or subsector diversity receive antenna pair. As shown in Fig. 4, there may be N number of reverse analog control channel receivers 120 where N represents the number of sectors in the cell.

When an access attempt by a subscriber unit is detected by one of the receivers it seizes the busy bus 122 to notify the forward channel 124. The forward channel 124 broadcasts a "busy bit" to temporarily prevent other accesses. This seizure also serves to locate the transmitting terminal to a specific sector. Once the analog control channel 115 locates the transmitting sector, it informs the base station controller (BSC) 126. The BSC 126 then activates the appropriate demodulator 128 for that sector.

Regardless of the TDMA based system used, the preferred step of acquiring a subscriber unit concludes with the initialization of several factors: subsector choice, default diversity antenna choice and dwell time. The choice of subsector may be based on the demodulator's determination of best signal quality received during acquisition. The demodulator then sets a dwell time based on the relative received signal quality. The dwell time represents the number of frames that the demodulator waits before instructing the switch to connect a different antenna for a one frame sample measurement. The default diversity antenna refers to, in a preferred embodiment, which of the A or B diversity antennas in the subsector will be switched at the end of the first dwell period.

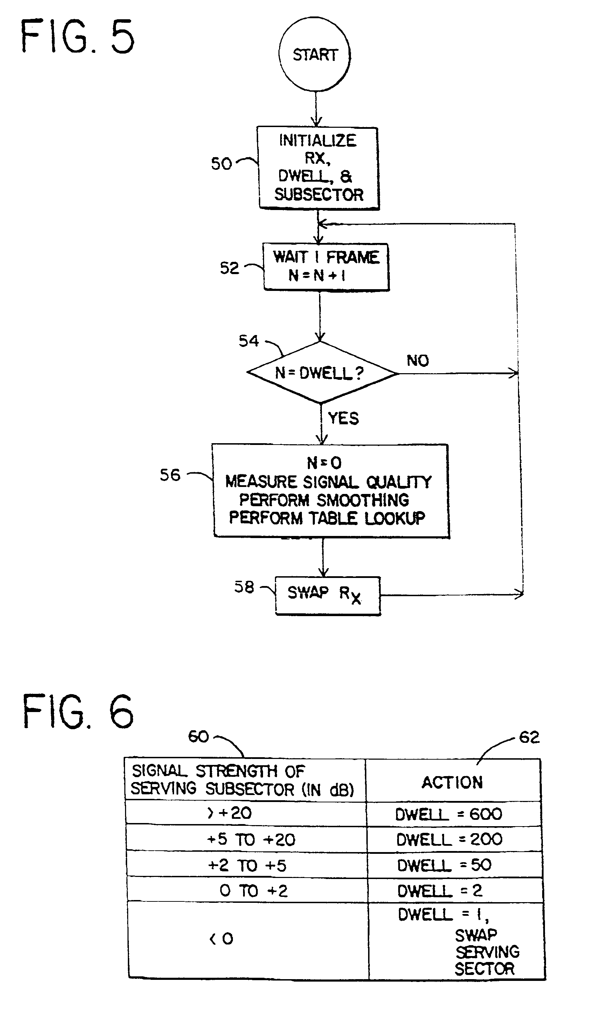

Once the subscriber unit is acquired, the next step is periodically scanning the antennas in the cell for best received signal quality. As is shown in Fig. 5, the preferred method begins, at 50, by initializing the receive antenna (Rx) choice, the dwell time and the subsector choice. Next, at 52, the demodulator waits for a frame, approximately 4.615 milliseconds in DCS1900, and increments an internal counter (N) by one increment. Following the increment of the counter, at 54, the demodulator makes a comparison of the current counter value and the dwell value. If the counter value is less than the dwell value, the demodulator continues to receive signals from the antenna it is currently monitoring and repeats the process of incrementing and comparing values.

During each of the cycles of waiting a frame and adding to the counter, signals are being received from both diversity antennas in a subsector. The received signals are downconverted and sampled in the downconvertors 12 and A/D convertors 16. When the demodulator receives the signals, it decodes and processes the voice and data information received from the designated Rx antenna.

At the conclusion of the dwell time, the values of the counter and the dwell time are equal. The demodulator, at 56, then resets the counter to zero, samples the signal from an antenna in an another subsector, smooths and compares signal quality information from the initial and the sampled antennas, and performs a table lookup to determine the new dwell time. Preferably, the demodulator instructs the switch to change antennas for one frame and then instructs the switch to return to the initial antenna. Also, the comparison measurement technique is preferably a signal strength measurement.

After the demodulator compares the signal quality of the initial and sampled antennas, it looks up information from a table of predetermined dwell values in memory. Fig. 6 illustrates a preferred lookup table for determining dwell times and whether the serving subsector needs to be switched based on relative signal strength in decibels (dB). The table contains predetermined ranges of relative signal strength readings, at 60, and a corresponding action to be taken by the demodulator, at 62 The action portion of the table designates the new value of dwell time, in frames, that the demodulator will wait until taking another sample. The presently preferred method offers an advantage of flexible adjustment. By altering the lookup table in memory, the antenna switching system 5 can be easily and inexpensively adjusted to optimize scanning procedures for varying environments.

The final step in the presently preferred method, at 58, is to swap the diversity antenna (Rx) which will be used to take a sample measurement after the period of time represented by the newly determined dwell period. The entire process repeats until the transmission is terminated or until the mobile user moves into another cell. This process is repeated for all active time slots such that the best signal may be tracked and used for every user in the cell.

The table in Fig. 6 represents a set of actions that cause the dwell time to decrease as the signal strength of the signals received at antennas in the presently chosen subsector decrease. When the relative signal strength is less than zero, the demodulator will swap serving sectors.

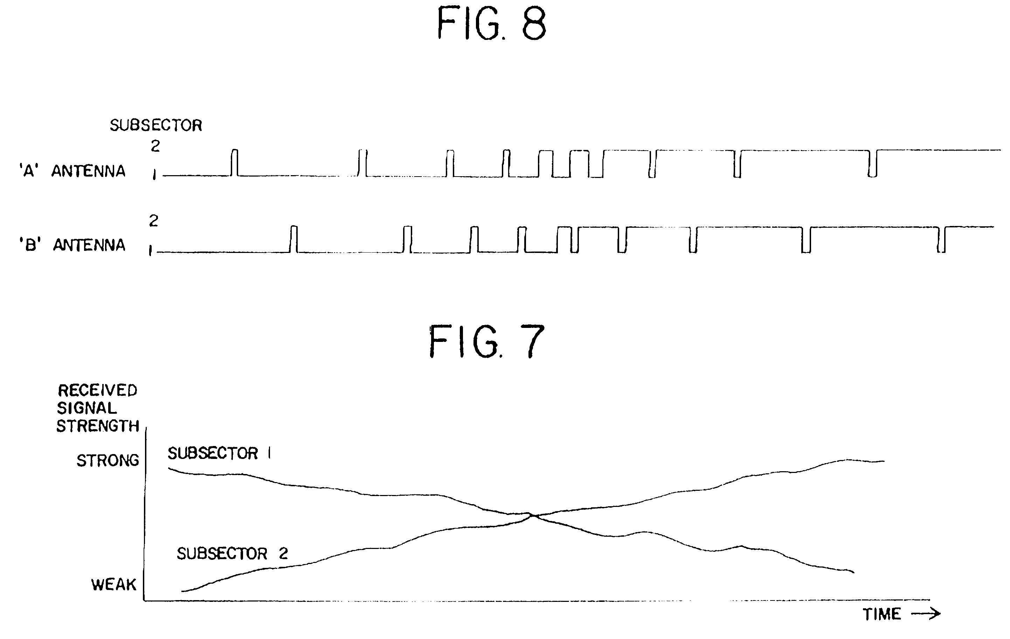

Figs. 7 and 6 provide an illustration of how the antenna switching system 5 would preferably perform, using a lockup table such as illustrated in Fig. 6, in response to a subscriber unit moving between subsectors in a cell site. Fig. 7 is a graph of received signal strength over time in adjacent subsectors 1 and 2 of a cell. As a mobile unit moves from subsector 1 to subsector 2, the received signal strength decreases in subsector 1 and correspondingly increases in subsector 2. As shown in Fig. 8, the initial subsector serving the mobile unit is subsector 1. As the mobile unit moves into subsector 2, the demodulator in the antenna switching system responds by progressively increasing the frequency of measurements in subsector 2 due to waning relative received signal strength in subsector 1. The antenna switching system 5 then switches the serving subsector to subsector 2 after the signal strength in subsector 1 falls below that of subsector 2.

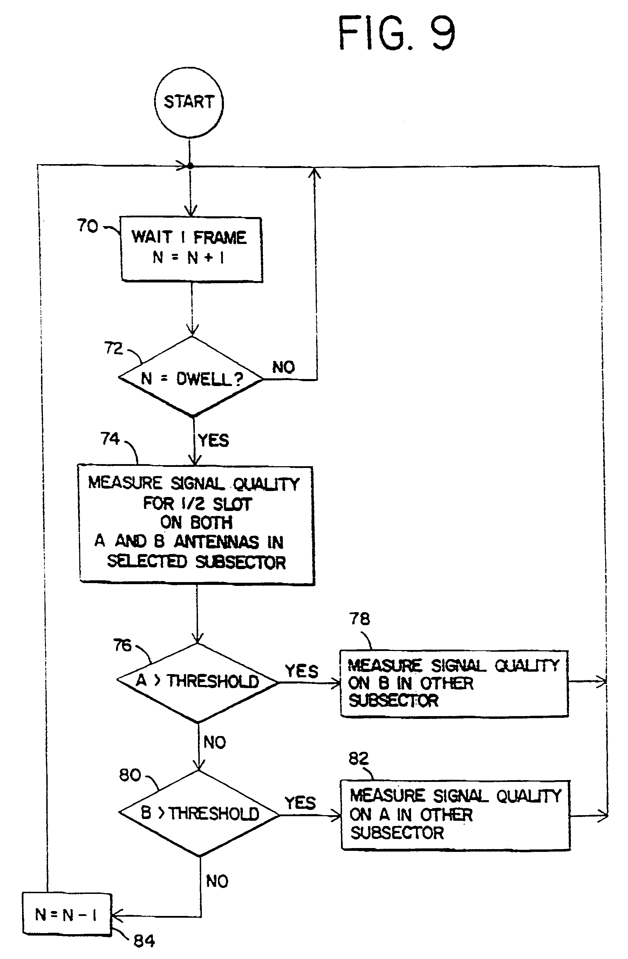

Another preferred embodiment of the present method is shown in Fig. 9. Fig. 9 shows the preferred method as adapted for use on an IS-54 based system. IS-54 is a TDMA system which incorporates 20 millisecond frames rather than the 4.615 millisecond frames of GSM-type systems. Because a frame in IS-54 format is much longer and carries more information than a GSM-type frame, as in DCS1900, the sensitivity of a communication in IS-54 format to sampling signals from other antennas increases. This sensitivity is due to the increased amount of information that might be lost while the system 5 samples signals on another antenna. Similar to the method shown in Fig. 5, the alternative embodiment used for IS-54 initially acquires a signal and selects a subsector and a dwell time. In one embodiment, the sampling rate can be reduced by simply increasing dwell times. The preferred embodiment of the present method, however, utilizes a partial time slot measurement technique for scanning the antennas. This method reduces sensitivity to sampling rate by assessing the quality of signals received from first and second antennas in real time as they are being received.

Once the system has acquired the signal and initialized the subsector and dwell time, the demodulator, at 70, waits for a frame and increments an internal counter (N) one increment. Next, at 72, the demodulator checks to see if the counter has reached the dwell time. If the internal counter (N) is less than the dwell time, the demodulator continues to receive signals on the first and second antennas, referred to as A and B antennas in Fig. 9, and repeats the steps, 70, 72. When the counter value equals the dwell time, the demodulator, at 74, measures the signal quality from the A and B antennas for half of a time slot. An IS-54 time slot is approximately 6.67 milliseconds. The demodulator then determines, at 76, if the signal from the A antenna in the present subsector is above a predetermined threshold. If it is, the demodulator controls, at 78, the switch so that the remainder of the time slot is spent measuring Signal quality of the B antenna in an adjacent subsector. As with the method described above for DCS and GSM systems, the signal quality measurements are applied to a lookup table from which new dwell time values are assigned and a new serving subsector may be selected.

Alternatively, if the signal from the A antenna is less than the threshold, the demodulator, at 80, 82, follows the same steps for the B antenna in the serving subsector and an A antenna in an adjacent subsector. If neither signal from the A and B antennas in the serving subsector is greater than the threshold, the demodulator does not take a sample measurement in an adjacent subsector. By first verifying that the signal strength from the antennas in the serving subsector are above a threshold, the chance of losing information by sampling a signal from an adjacent subsector are diminished. The demodulator will only sample another signal if the signal on the receive path in the present subsector can provide satisfactory quality information in case the sampled subsector has too weak of a signal to use. The threshold is preferably -85 dB or 20 dB C/I.

The above-described methods for selecting an antenna in a DCS, GSM or IS-54 system clearly apply to a variety of antenna arrangements with only minor changes to the selector switch and the demodulator. For example, to handle a six sector cell wherein each sector has one antenna, the selector switch would have six inputs. Additionally, the demodulator would occasionally select previously measured weak antennas to see if their signals are getting stronger. Further, received signal strength measurements may be replaced by other measurements such as Eb/No, C/I or combinations of these metrics. Additionally, while this technique was described for use with a forward error control (FEC) scheme, other schemes are equally viable. A basic Automatic Repeat Request (ARQ) error control system operating on each burst is also suitable for use in the presently preferred method.

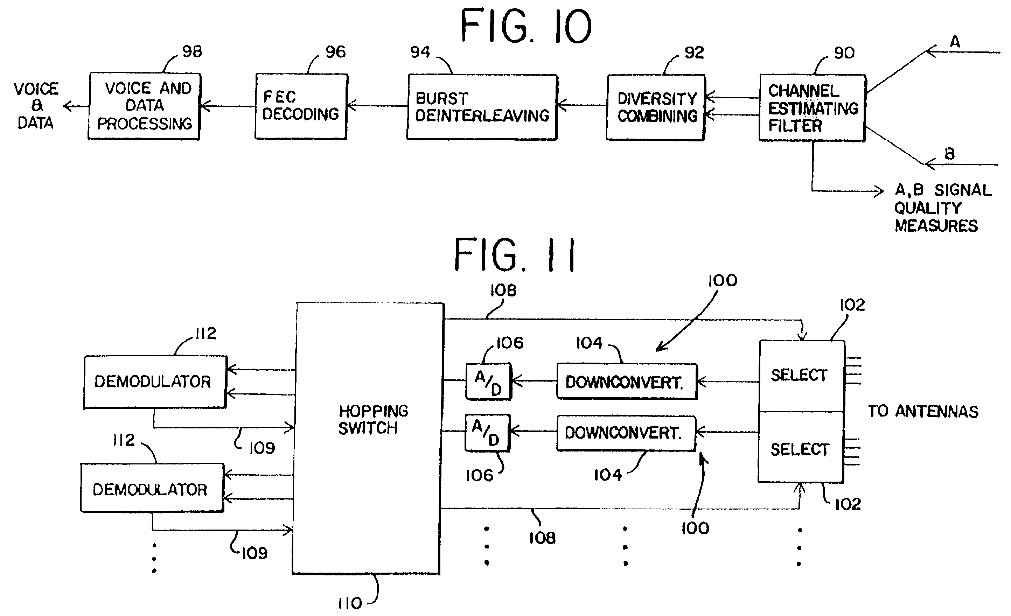

Fig. 10 best shows the functions within the demodulator. Digital samples of the received waveforms coming from the A/D convertors are processed by the demodulator and a model of the channel multipath delay spread magnitude and phase is formed and tracked. The demodulator, at 90, passes the signals from an A and B diversity antenna pair through a channel estimating filtering step that provides the A and B signal quality estimates for each time slot currently being tracked. These signal quality estimates are then processed in the demodulator according to the method described above.

The filter outputs, at 92, are diversity combined to mitigate the effects of channel fading that often occur in cellular applications. The diversity combiner provides estimates of each received bit and these bits, at 94, are stored in the deinterleaver memory. When enough bits are stored in the deinterleaver memory to Forward Error Correct (FEC) decode a frame, that data is passed, at 96, to the FEC decoder. Output from the FEC decoder is the payload data or voice information. The payload data and voice information, at 98, is then further processed and sent to the appropriate destination. Any of a number of standard algorithms for performing the internal functions of the demodulator as illustrated in Fig. 10, may be implemented. An example of a demodulator providing these functions is the Alcatel Mobile Systems Division DCS 1800 Frame Unit. This equipment employs digital signal processors and application specific integrated circuits to perform the described functions.

An alternatively preferred embodiment of the present method may also handle a frequency hopping architecture, such as is commonly used in GSM 900, DCS 1800, or DCS 1900 systems. Generally speaking, a hopping switch acts to connect different downconvertors and their respective tuned RF channels to different demodulators according to a prearranged schedule. This schedule is also followed by the subscriber units so their frequency changes are synchronized to the hopping switch and the transmissions from a specific subscriber unit is routed to the proper demodulator. The demodulator performs the same steps as it does in the non-hopping system. The control line, however, is routed to the hopping switch rather than to the antenna selecting switch. The hopping switch routes the control signal from the demodulator to the appropriate antenna select switch.

An example of a GSM hopping receiver front end incorporating the adaptive antenna selecting system of the present invention is seen in Fig. 11. A plurality of received paths 100 include a switch 102 for selecting among at least two antennas, a downconvertor 104 coupled to said switch 102 and an A/D convertor 106 for sampling signals received from the downconvertor. Each received path is connected via a control line 108 and a signal line to a hopping switch 110. The hopping switch 110 also connects to a demodulator 112 and to A/D control lines 109 connected to the demodulator 112. As is seen in Fig. 11, the hopping switch 110 acts as an intermediary between the demodulator 112 and the switches 102 for the control lines 109, 108. The hopping switch 110 connects the proper receive path 100 with the demodulator 112 in synchronization with a predetermined change in frequency transmitted from a mobile unit.

From the foregoing an improved method and apparatus for adaptively selecting an antenna in a cellular radio application has been described. The adaptive antenna selecting system includes a demodulator capable of measuring signal quality and controlling an antenna selector switch without the need of external scanning receivers. Additionally, a method for adaptively selecting an antenna in a cellular radio application has been described that is applicable to DCS, GSM, IS-54 and any other TDMA based system.

It is intended that the foregoing detailed description be regarded as illustrative rather than limiting in that it be understood that the following claims, including all equivalents are intended to define the scope of this invention.

## Claims

1. An antenna selector system (5) for use in radio communications systems comprising:
a switch (14) capable of receiving signals from a plurality of antennas;
at least two receive paths (11), each or said receive paths (11) coupled to said switch (14); and
a demodulator (18) coupled to said receive paths (11) for decoding and processing, and measuring signal quality of, each of said signals, said demodulator (18) controlling said switch (14) to select one of said antennas based upon said signal quality measurement.

2. The system (5) of Claim 1 wherein each of the at least two receive paths (11) comprises a downconvertor (12) coupled to said switch (14) and an A/D convertor (16) coupled to said downconvertor (12) and said demodulator (18), said downconvertor (12) for downconverting said signal and said A/D convertor (16) for digitally sampling said downconverted signal.

3. The system (5) of Claim 1 wherein said demodulator (18) is coupled to said switch (14) via a control line, said demodulator (18) using said control line to control said switch (14).

4. The system (5) of Claim 1 wherein said plurality of antennas comprises a cell (30) in a cellular radio communications system, said cell having three sectors (32), each sector (32) having two subsectors (34), wherein each of said subsectors (34) has a first and a second diversity antenna.

5. A method for selecting antennas in a radio communications system comprising the steps of:
receiving and decoding signals from at least two receive paths (11) at a demodulator (18);
measuring signal quality of said signals in said demodulator (18);
controlling a switch (14) connected to a plurality of antennas with said demodulator (18) to route signals from selected antennas to said receive paths (11) based on said signal quality measurements.

6. The method of Claim 5 wherein said step of measuring signal quality comprises the steps of:
measuring signal quality of a signal from a first antenna at said demodulator (18);
controlling said switch (14) with said demodulator (18) after a dwell period to switch to a second antenna;
measuring signal quality of a signal from said second antenna at said demodulator (18); and
comparing said signal quality measurements of said first and second antennas.

7. The method of Claim 5 wherein said plurality of antennas comprises a cell site, said cell site having at least two subsectors, said subsectors each comprising two antennas, wherein the method further comprises the steps of:
initializing an antenna choice;
selecting a initial subsector; and
selecting a dwell time.

8. The method of Claim 7 wherein the step of selecting an initial subsector further comprises the steps of:
controlling the switch (14) to select two of said plurality of antennas during a control channel period;
measuring signal quality received at each of said two antennas at said demodulator (18); and
selecting a subsector based on said signal quality measurement.

9. The method of Claim 7 wherein the step of selecting an initial subsector further comprises the steps of:
controlling the switch (14) to combine signals from said antennas in a first subsector;
controlling the switch (14) to combine signals from said antennas in a second subsector;
measuring signal quality of signals received at each of said sets of antennas; and
selecting a subsector based on said signal quality measurement.

10. A method for selecting antennas in a radio communications system comprising the steps of;
receiving signals at a demodulator (18) from a first and a second antenna in a subsector;
measuring signal quality of said signals at said demodulator (18) for a first portion of a time slot;
determining if said signal quality is greater than a predetermined threshold; and
controlling a switch (14) connected to a plurality of antennas with said demodulator (18) to select signals from an antenna in an adjacent subsector for a second portion or said time slot based on said signal quality determination.
